Europäisches Patentamt

European Patent Office

Office européen des brevets

(11) Numéro de publication: **0 007 289**
**A1**

(12) **DEMANDE DE BREVET EUROPEEN**

(21) Numéro de dépôt: **79810061.6**

(22) Date de dépôt: **09.07.79**

(51) Int. Cl.³: **B 23 K 7/08**

(30) Priorité: **07.07.78 CH 7401/78**

(43) Date de publication de la demande:
**23.01.80 Bulletin 80/2**

(84) Etats Contractants Désignés:
**AT BE CH DE FR GB IT LU NL SE**

(71) Demandeur: **BATTELLE MEMORIAL INSTITUTE
7 route de Drize
CH-1227 Carouge/Genève(CH)**

(72) Inventeur: **Roggen, Rolf
chemin de la Bâtie 3
CH-1213 Petit-Lancy(CH)**

(72) Inventeur: **Hamberger, Hans
Am Brienzersee
CH-3854 Oberried(CH)**

(74) Mandataire: **Dousse, Blasco et al,
7, route de Drize
CH-1227 Carouge/Genève(CH)**

(54) Cartouche pour l'allumage d'une lance à oxygène.

(57) Une cartouche pour l'allumage d'une lance à oxygène comprend une douille (1) présentant une extrémité fermée et une extrémité ouverte permettant l'introduction de l'extrémité libre de la lance à allumer et son coulissement à l'intérieur de la douille. Une amorce (4,5) à percussion est disposée au voisinage d'au moins un corps combustible (2) qui est situé à proximité de l'extrémité fermée de la douille (1) et est inflammable en présence d'un courant d'oxygène. Une percussion de la lance à oxygène contre l'amorce (4,5) permet de déclencher celle-ci, d'enflammer le corps combustible (2) et d'allumer ainsi la lance à oxygène.

Figure 1

FIG. I

Croydon Printing Company Ltd.

EP 0 007 289 A1

# CARTOUCHE POUR L'ALLUMAGE D'UNE LANCE A OXYGENE

L'allumage d'une lance à oxygène s'obtient à une température élevée de l'ordre de 1000°C. Différents moyens de chauffage permettent d'atteindre cette température d'allumage à l'extrémité libre de la lance, par exemple un chalumeau, ou un morceau de bois incandescent.

Ces moyens d'allumage ne permettent pas d'assurer toujours un allumage facile et sûr, limitant ainsi l'utilisation des lances à oxygène par exemple lors du forage de trous.

Le but de la présente invention est d'assurer l'allumage d'une lance à oxygène d'une façon simple, sûre et économique, aussi bien à l'air que sous l'eau.

A cet effet, la présente invention a pour objet une cartouche pour l'allumage d'une lance à oxygène à son extrémité libre alimenté en oxygène, caractériséepar le fait qu'elle comprend :

 - une douille (1) qui présente une extrémité fermée et une extrémité ouverte permettant l'introduction de l'extrémité libre de la lance (10) à allumer et son coulissement longitudinal à l'intérieur de cette douille; et,

 - une amorce à percussion (4,5) disposée au voisinage d'au moins un corps combustible (2) qui est situé à proximité de l'extrémité fermée de la douille (1) et est inflammable à l'aide d'un courant d'oxygène, le tout de telle manière qu'une percussion de la lance à allumer contre l'amorce (4,5) puisse délencher celle-ci, que ladite masse combustible (2) soit ainsi enflammée en présence d'un courant d'oxygène fourni par cette lance, et que la combustion de cette masse enflammée (2) engendre dans la douille (1) de la chaleur permettant d'allumer la lance.

Le dessin annexé illustre, très schématiquement et à titre d'exemple, une forme d'exécution et des variantes de la cartouche selon l'invention.

La figure 1 est une vue en élévation avec coupe axiale partielle de cette forme d'exécution.

Les figures 2 à 4 illustrent partiellement trois variantes de la figure 1.

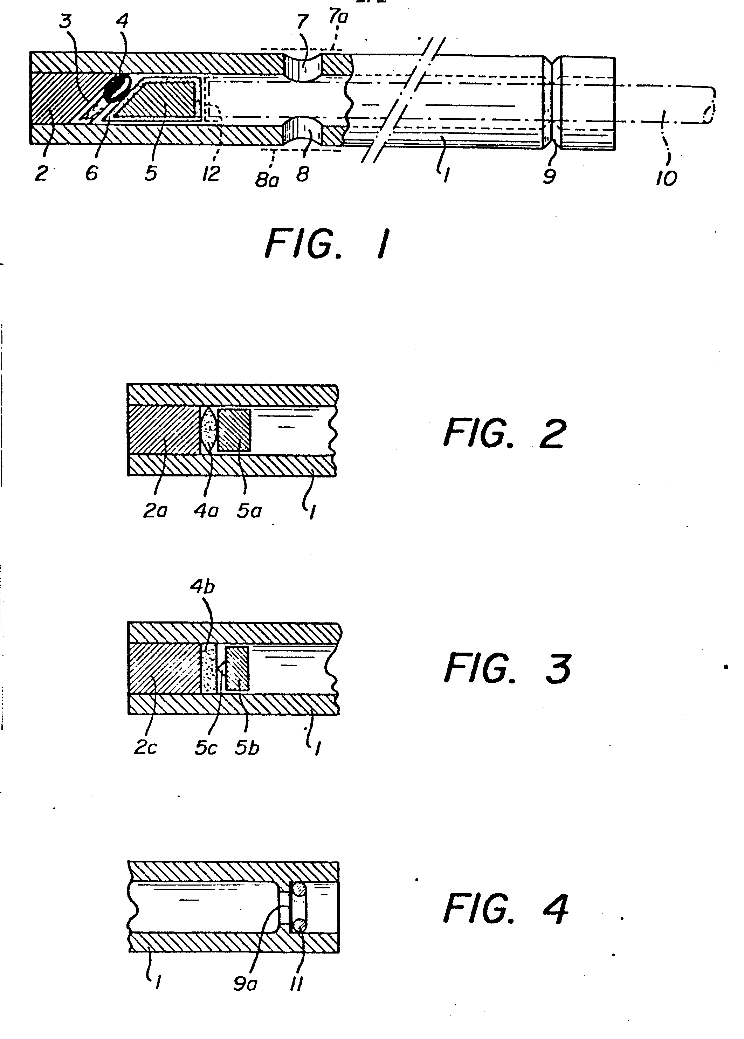

La cartouche illustrée par la figure 1 comporte une douille 1 dont la paroi relativement épaisse est formée de carton stratifié et dont une des extrémités est fermée de façon étanche par un bouchon de liège 2 dont l'extrémité interne 3 est taillée en biseau dans le but que l'on expliquera par la suite. Un corps d'allumage 4 comprenant une masse inflammable par frottement, en l'occurrence une tête d'allumette est disposée entre la face biseautée 3 du bouchon 2 et la face biseautée d'un organe de percussion 5, constitué par un morceau de liège revêtu d'un abrasif de manière à former une surface de frottement rugueuse 5 semblable à celle d'un frottoir de boîte d'allumettes. Cet organe 5 est monté à l'intérieur de la douille 1 de manière à pouvoir coulisser et permettre l'accès de l'oxygène au bouchon combustible (2) lors de l'allumage. Le corps d'allumage 4 et l'organe 5 constituent ainsi une amorce à percussion. Deux passages latéraux 7 et 8 dans la paroi de la douille 1 se trouvent axialement en retrait par rapport à l'organe 5. Un étranglement 9 est ménagé à proximité de l'extrémité ouverte de la douille 1. Cet étranglement est destiné à permettre l'ajustement de la cartouche sur la lance à oxygène 10 représentée en traits mixtes par la figure 1 et à créer un joint étanche avec cette lance afin de ménager à l'intérieur de la douille 1 une chambre annulaire ne communiquant avec l'extérieur que par les passages 7 et 8, lorsque la lance est introduite dans cette douille 1.

Il est important, dans le cas de la forme d'exécution décrite, de relever certaines particularités du dispositif d'allumage. Le fait que le liège est compressible et que le corps 4 est disposé entre deux surfaces biseautées permettra, en exerçant une pression sur l'organe 5 à l'aide de la lance 10 de créer des contraintes de cisaillement induisant un frottement suffisant de la surface abrasive 6 de l'organe 5 contre le corps 4 pour provoquer l'inflammation de cette amorce. Etant donné que l'ensemble des composants de la cartouche et, notamment le bouchon 2 sont en une substance combustible, l'amorce enflammée et la présence d'oxygène amené par un canal axial qui traverse la lance 10 dont l'extrémité extérieure est reliée à une source d'oxygène sous pression (non représentée), permet à la zone de combustion de se propager avec rapidité jusqu'au corps de liège 2 et à tous les éléments combustibles entourant l'amorce 4,5 y compris la douille 1. L'échappement des gaz portés à hautes températures se fait latéralement par les ouvertures 7 et 8. En remontant vers ces ouvertures, les gaz de combustion chauffent l'extrémité de la lance qui atteint en quelques secondes la température d'allumage de la lance. Le dimensionnement de la paroi de la douille de carton 1 ainsi que du bouchon 2 est choisi de manière à résister suffisamment longtemps pour permettre à la lance d'atteindre cette température.

En pratique, il suffit de coiffer l'extrémité de la lance de la cartouche, de régler le débit d'oxygène nécessaire et de percuter l'extrémité fermée de la douille 1 à l'aide de la lance contre une surface solide, tel que le sol, un mur, etc ... Ce choc provoque la compression des deux organes en liège 2 et 5 d'où résulte le frottement de la surface 6 contre le corps 4, rendu possible grâce aux surfaces biseautées des organes 2 et 5.

Bien entendu on pourrait envisager d'autres variantes susceptibles de créer le frottement de l'amorce d'allumage. C'est ainsi que l'on pourrait envisager de revêtir une portion de l'intérieur du tube 1 de substance abrasive tandis que

- 4 -

0007289

l'organe 5 pourrait être revêtu d'une couche de poudre inflammable par frottement ou vice-versa.

L'avantage de la forme d'exécution décrite réside avant tout dans sa simplicité, conduisant à une réalisation bon marché et d'utilisation sûre et fiable. Il est aussi intéressant que l'ensemble des composants de la cartouche soit combustible. Le corps d'allumage 4 utilisé est constitué par une simple allumette, tandis que l'organe de percussion 5 peut être réalisé par un morceau de liège sur la face biseautée duquel on colle du papier d'émeri par exemple, servant de frottoir. En variante, on peut enduire l'organe 5 d'un revêtement contenant de la poudre abrasive.

L'utilisation d'une amorce d'allumage comprenant une poudre inflammable par frottement est une solution qui ne présente aucun risque d'explosion en présence d'oxygène et est facilement mise à feu par une simple percussion exercée sur la lance (selon la flèche, fig. 1).

Bien entendu, il est possible d'imaginer d'autres variantes du système d'allumage dans lesquelles la mise à feu de l'amorce d'allumage est consécutive à une percussion exercée par l'intermédiaire de la lance, l'extrémité fermée de la cartouche étant retenue par une surface d'appui.

Les variantes des figures 2 et 3 montrent, à titre d'exemple, deux autres types d'amorces, l'une comprenant le corps 4a constitué par de la poudre explosive mise à feu par percussion, l'autre le corps 4b constitué par une substance qui s'enflamme spontanément en présence d'oxygène, telle que du zinc diéthyle. Dans ce dernier cas la substance est enfermée dans une enveloppe étanche qui doit être perforée pour mettre le zinc diéthyle en présence de l'oxygène amené par le passage axial traversant la lance. A cet effet, l'organe de percussion 5b est en un matériau rigide, par exemple en une matière plastique dure et présente une pointe 5c destinée à perforer l'enveloppe étanche au corps 4b pour mettre le zinc diéthyle en contact avec l'oxygène. Dans le cas de la figure 2, il faut évidemment que le corps combustible 2a et l'organe de percussion 5a soient réalisés en un matériau dur, de manière à transmettre la percussion au corps explosif 4a. Il faut noter toutefois que l'allumage à l'aide d'une substance explosive peut présenter un certain danger pour l'utilisateur, notamment en présence d'oxygène pur.

La variante illustrée par la figure 4 est plus particulièrement destinée à être utilisée sous l'eau. L'allumage d'une lance à oxygène destinée à être utilisée en plongée pose un problème qui n'a pas été résolu jusqu'ici. En effet, l'allumage de la lance doit, avec les moyens actuels, être fait hors de l'eau. Par conséquent, entre le moment où la lance est allumée et celui où le plongeur arrive à son lieu de travail, une longueur importante de lance s'est consumée, d'où l'intérêt particulièrement grand de pouvoir allumer la lance à oxygène sous l'eau à proximité immédiate du lieu de travail.

La conception générale de la cartouche reste la même que celle décrite en relation avec la figure 1. Toutefois, les ouvertures 7 et 8 peuvent être provisoirement fermées, de même que l'extrémité ouverte du tube 1. En outre, si on veut permettre le séjour des cartouches dans l'eau, il est préférable de remplacer le tube de carton par un tube de matière plastique non perméable à l'eau tout en étant combustible. Dans ce cas, on peut envisager la fermeture des ouvertures 7 et 8 à l'aide d'opercules 7a et 8a (figure 1) réalisés en même temps que la douille 1, par moulage, ou rapportés après coup. De même, l'extrémité ouverte de la douille 1 pourra être fermée par un opercule 9a situé de préférence au niveau de l'étranglement 9 (fig. 4), de sorte que la rupture de cet opercule par la lance pourra être obtenue sans pénétration d'eau dans la douille, étant donné le contact étanche entre l'étranglement et la lance. Cette étanchéité d'ailleurs peut être améliorée dans ce cas en plaçant un joint d'étanchéité 11 (fig. 4) du côté de l'étranglement situé vers l'extrémité ouverte du tube 1, de sorte que l'étranglement retienne ce joint lors de l'introduction de la lance dans le tube 1.

0007289

L'amenée d'oxygène sous pression dans le tube 1 permet de faire éclater les opercules 7a, 8a et 9a, la pression d'oxygène étant choisie, suivant la profondeur du lieu de travail sous l'eau, de manière à empêcher l'entrée d'eau dans le tube 1.

Dans une variante de cette forme d'exécution, les opercules peuvent.être formés par un bouchon de paraffine qui fond rapidement dès que la température s'élève légèrement.

Dans une autre variante, non représentée, la cartouche de la figure 1 a été plongée dans un bain de paraffine de sorte qu'elle est entièrement recouverte, intérieurement et extérieurement d'un film de paraffine destiné à protéger la zone d'allumage, vis-à-vis de l'eau.

Dans une autre variante encore, la douille 1 peut être munie de tous moyens d'étanchéité permettant d'isoler l'amorce, tel que l'élément d'étanchéité 12 indiqué schématiquement, destiné à isoler l'amorce 4,5 (fig. 1).

REVENDICATIONS

1. Cartouche pour l'allumage d'une lance à oxygène à son extrémité libre alimenté en oxygène, caractérisée par le fait qu'elle comprend :

- une douille (1) qui présente une extrémité fermée et une extrémité ouverte permettant l'introduction de l'extrémité libre de la lance (10) à allumer et son coulissement longitudinal à l'intérieur de cette douille ; et,

- une amorce à percussion (4,5) disposée au voisinage d'au moins un corps combustible (2) qui est situé à proximité de l'extrémité fermée de la douille (1) et est inflammable à l'aide d'un courant d'oxygène, le tout de telle manière qu'une percussion de la lance à allumer contre l'amorce (4,5) puisse déclencher celle-ci, que ladite masse combustible (2) soit ainsi enflammée en présence d'un courant d'oxygène fourni par cette lance, et que la combustion de cette masse enflammée (2) engendre dans la douille (1) de la chaleur permettant d'allumer la lance.

2. Cartouche d'allumage selon la revendication 1, caractérisée par le fait que la douille (1) est formée essentiellement d'un matériau isolant thermique.

3. Cartouche d'allumage selon la revendication 1 ou 2, caractérisée par le fait que la douille (1) est formée d'un matériau combustible capable d'être brûlé au moins partiellement lors de l'allumage.

4. Cartouche d'allumage selon la revendication 3, caractérisée par le fait que la douille (1) est formée essentiellement de carton.

5. Cartouche d'allumage selon l'une des revendications 1 à 4, caractérisée par le fait que la surface interne de la douille (1) est agencée de telle manière que la douille épouse la lance à oxygène, au moins à proximité de l'extrémité ouverte de cette douille.

6. Cartouche d'allumage selon la revendication 5, carac-

-térisée par le fait que la douille (1) présente à proximité de son extrémité ouverte un étranglement (9) adapté à la lance à allumer.

7. Cartouche d'allumage selon l'une des revendications 1 à 6, caractérisée par le fait que la douille (1) est agencée de telle manière qu'elle puisse délimiter un espace annulaire autour de l'extrémité libre de la lance à allumer.

8. Cartouche d'allumage selon l'une des revendications 1 à 7, caractérisée par le fait que la douille (1) présente au moins une sortie latérale (7,8) pour les produits de combustion formés lors de l'allumage.

9. Cartouche d'allumage selon la revendication 8, caractérisée par le fait que la sortie latérale (7,8) de la douille (1) est munie d'un opercule susceptible d'être écarté au moins partiellement de la sortie lors de l'allumage, par suite d'une élévation de pression et/ou de température. .

10. Cartouche d'allumage selon la revendication 8, caractérisée par le fait que la douille (1) comprend des moyens d'étanchéité permettant d'isoler ladite amorce (4,5) et ledit corps combustible (2).

11. Cartouche d'allumage selon l'une des revendications 1 à 10, caractérisée par le fait que l'extrémité ouverte de la douille (1) est munie de moyens d'étanchéité (9a) qui empêchent la pénétration d'humidité dans la douille (1) jusqu'à l'utilisation de la cartouche pour l'allumage.

12. Cartouche d'allumage selon l'une des revendications 1 à 11, caractérisée par le fait que la douille est munie de moyens (7a,8a,9a) permettant d'isoler l'intérieur de la cartouche du milieu ambiant, avant son utilisation pour l'allumage.

13. Cartouche d'allumage selon l'une des revendications 1 à 12, caractérisée par le fait que l'amorce à percussion comprend un corps d'allumage inflammable (4) disposée entre le corps combustible (2) et un organe de percussion (5) capable d'être repoussé contre ce corps d'allumage (4) par une percussion de la lance, de telle manière que ce corps d'allumage puisse être enflammé, et que les produits de combustion puissent s'échapper autour de l'extrémité libre de la lance.

14. Cartouche d'allumage selon la revendication 13, caractérisée par le fait que l'organe de percussion (5) présente une surface de frottement (6) capable d'agir sur le corps d'allumage (4) afin de l'enflammer.

15. Cartouche d'allumage selon la revendication 14, caractérisée par le fait que la surface de frottement (6) est inclinée par rapport à l'axe de la douille (1).

FIG. 1

FIG. 2

FIG. 3

FIG. 4

## Office européen des brevets

## RAPPORT DE RECHERCHE EUROPEENNE

Numéro de la demande

EP 79810061.6

| Catégorie | DOCUMENTS CONSIDERES COMME PERTINENTS | | CLASSEMENT DE LA DEMANDE (Int. Cl.²) |
|---|---|---|---|
| | Citation du document avec indication, en cas de besoin, des parties pertinentes | Revendication concernée | |
| X | US - A - 2 634 196 (PENNECOT) -- | 1 | B 23 K 7/08 |
| A | DE - A1 - 2 531 918 (KALLENBACH) ---- ( | | |

### DOMAINES TECHNIQUES RECHERCHES (Int. Cl.²)

F 23 Q 3/00
F 21 C 21/00

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| VIENNE | 27-09-1979 | BENCZE |

OEB Form 1503.1 06.78